# FASCICULE DE BREVET EUROPEEN

(11) **EP 3 490 811 B1**
(45) Date de publication et mention de la délivrance du brevet: **02.09.2020**
(21) Numéro de dépôt: 17751845.3
(22) Date de dépôt: 14.07.2017
(51) Int. Cl.: B60C 1/00, B60C 13/04, B60C 13/00

(54) **PNEUMATIQUE AVEC INSERT**
REIFEN MIT EINSATZ
TYRE WITH INSERT

(30) Priorité: 29.07.2016 FR 1670415
(43) Date de publication de la demande: 05.06.2019
(73) Titulaire: Compagnie Générale des Etablissements Michelin, 63000 Clermont-Ferrand (FR)
(72) Inventeur: MERINO LOPEZ, José, 63040 Clermont-Ferrand Cedex 09 (FR); COSTE, Nathalie, 63040 Clermont-Ferrand Cedex 09 (FR); PIALOT, Frédéric, 63040 Clermont-Ferrand Cedex 09 (FR); DELBOS, Mathieu, 63040 Clermont-Ferrand Cedex 09 (FR)
(74) Mandataire: Desbordes, Guillaume
(86) Numéro de dépôt international: PCT/IB2017/054269
(87) Numéro de publication internationale: WO 2018/020353

(56) Documents cités:
- EP-A1- 1 454 942
- DE-A1-102009 003 333
- FR-A1- 2 864 469
- KR-A- 20090 068 400

## Description

### DOMAINE TECHNIQUE DE L'INVENTION

La présente invention concerne un pneumatique. Elle concerne plus particulièrement un pneumatique composé à forte proportion de poudre de pneumatiques recyclés.

### ETAT DE LA TECHNIQUE ANTERIEURE

Le domaine des pneumatiques est soumis à de nombreux impératifs. En effet, le pneumatique doit offrir des garanties de sécurité, de durabilité, et de bonnes performances.

Le pneumatique est soumis à d'importantes agressions extérieures, tels que les nids de poule ou encore les trottoirs. Il est donc important qu'il ait une résistance élevée.

Par ailleurs, les problématiques environnementales conduisent aujourd'hui au développement de produits plus respectueux de l'environnement. Il est notamment connu l'utilisation de poudre de mélange caoutchoutique de pneumatique recyclé. Cette poudre est constituée de résidus de pneumatiques usés (ou neufs avec des défauts de fabrication) qui sont désassemblés à l'aide de machines spécialement conçues permettant de récupérer les matériaux caoutchoutiques vulcanisés, et d'extraire les renforts textiles et métalliques. Les matériaux caoutchoutiques extraits sont ensuite broyés pour en faire une poudre (parfois désignée « poudrette » du fait de la taille très fine des particules obtenues). Une poudre de ce type peut être utilisée dans de nombreuses applications où l'on souhaite intégrer des matériaux recyclés, que ce soit pour des raisons économiques et/ou environnementales.

**Le** document KR2009068400 décrit la composition caoutchoutique d'une doublure intérieure de pneumatique. Cette doublure intérieure est un mélange de caoutchouc butyle halogène, de caoutchouc naturel, de caoutchouc butyle recyclé, de noir de carbone et dans une faible mesure de poudre de déchets de pneumatique.

Le document EP2104710 décrit une bande de roulement de pneumatique composé d'une poudre de gomme de xanthane dans une proportion de 10 à 40pce.

De manière générale, pour les pneumatiques, l'utilisation des poudres de matériaux recyclés reste limitée à des proportions faibles, principalement dans le but de ne pas altérer les performances du pneumatique.

Le document DE102009003333 décrit un pneumatique comportant, sous la zone du sommet, une couche supplémentaire auto-obturante. Cette couche est constituée de gel viscoélastique composé préférentiellement de 30% de poudre recyclée. Cette couche supplémentaire est prévue pour une fonction spécifique d'obturation d'éventuelles obturations de la bande de roulement du pneumatique causées par des objets intrusifs tels que des clous. La couche auto-obturante ne contribue pas à la fonction de structure porteuse du pneumatique.

Le document FR2864469 décrit un pneumatique autoporteur à flancs renforcés à l'aide d'inserts agencés dans les flancs. Les inserts sont constitués de compositions de caoutchoucs permettant aux flancs de supporter une charge correspondant à une partie du poids du véhicule dans une situation dans laquelle la pression de gonflage est réduite ou nulle. Ce pneumatique n'utilise pas de matériaux recyclés.

Le document EP1454942 décrit un procédé permettant de traiter des poudres de pneumatiques recyclés afin d'en améliorer les propriétés, en particulier la résistance à l'abrasion et à la propagation des fissures.

Pour pallier ces différents inconvénients, l'invention prévoit différents moyens techniques.

### EXPOSE DE L'INVENTION

Tout d'abord, un premier objet de l'invention consiste à permettre une utilisation à large échelle des résidus de pneumatiques arrivés en fin de vie.

Un autre objet de l'invention consiste à diminuer les coûts de matière première des pneumatiques tout en assurant un maintien du niveau de qualité des produits fabriqués.

Un autre objet de l'invention consiste à prévoir un pneumatique composé dans une forte proportion de matériaux issus de pneumatiques en fin de vie, sans perte de performance du pneumatique.

Encore un autre objet de l'invention consiste à diminuer les coûts de matière première des pneumatiques tout en permettant de réduire les risques de fissuration par attaque chimique et/ou UV.

Un autre objet de l'invention consiste à prévoir un pneumatique à coût réduit.

Pour ce faire, l'invention prévoit un pneumatique comprenant des flancs, une zone sommet pourvue d'une bande de roulement, d'une structure de renfort s'étendant entre les flancs et passant par la zone sommet, lesdits flancs, ladite zone sommet et ladite structure de renfort formant une structure porteuse délimitée intérieurement par une paroi interne de pneumatique, au moins une portion de la zone du pneumatique située entre la structure de renfort et la paroi interne comportant un insert faisant structurellement partie de la structure porteuse et comprenant une première composition élastomère servant de matrice dans laquelle est répartie, de façon sensiblement uniforme, une seconde composition élastomère issue de pneumatiques recyclés, la proportion de ladite seconde composition élastomère étant supérieure ou égale à 40%.

Selon une telle architecture, l'utilisation d'un taux élevé de poudre de pneumatique permet une réduction des coûts de matières premières tout en permettant une réutilisation avantageuse de matériaux recyclés.

Selon un mode de réalisation avantageux, la première composition est une composition caoutchoutique.

Selon un autre mode de réalisation avantageux, la seconde composition élastomère est présente en une quantité supérieure ou égale à 60%, et plus préférentiellement supérieure ou égale à 80%.

Plus le taux est élevé, plus les coûts de fabrication sont réduits, sans risque de perte de performance pour le pneumatique du fait de l'architecture spécifiquement prévue à cet effet.

Selon divers modes de réalisation, l'insert est situé sous la zone de sommet, ou le long d'au moins un des flancs selon la direction radiale, ou dans au moins une extrémité axiale de la structure de renfort, encore appelée épaule.

Cet emplacement spécifique de l'insert procure un effet anti-fluage des mélanges à travers les renforts. Cet effet est particulièrement utile lors de la fabrication des pneumatiques.

Selon encore un mode de réalisation avantageux, l'insert est recouvert d'une couche d'étanchéité dépourvue de composition élastomère issue de pneumatiques recyclés. Cette couche étanche est prévue de façon à être en contact avec le gaz de gonflage du pneumatique.

Cette couche d'étanchéité comporte de préférence plus de 50 pce de butyle.

La couche d'étanchéité comporte avantageusement des éléments antioxydants, tel que par exemple du 6 PPD.

Selon encore un mode de réalisation avantageux, la seconde composition élastomère issue de pneumatiques recyclés présente une granulométrie inférieure ou égale à 1mm et préférentiellement inférieure ou égale à 0,5mm, et encore plus préférentiellement inférieure ou égale à 0,2mm de diamètre moyen de chacune des particules.

Cette granulométrie très fine facilite la préparation du mélange requis pour fabriquer l'insert et favorise l'obtention d'un mélange homogène.

Selon un mode de réalisation avantageux, la première composition élastomère présente un taux élevé d'antioxydants, comme par exemple du 6PPD avec un taux avantageusement supérieur à 2 pce.

### DESCRIPTION DES FIGURES

Tous les détails de réalisation sont donnés dans la description qui suit, complétée par la figure unique présentée uniquement à des fins d'exemples non limitatifs, et illustrant une vue en coupe transversale d'un exemple de réalisation de pneumatique pourvu d'un insert disposé au voisinage de la cavité du pneumatique.

### DESCRIPTION DETAILLEE DE L'INVENTION

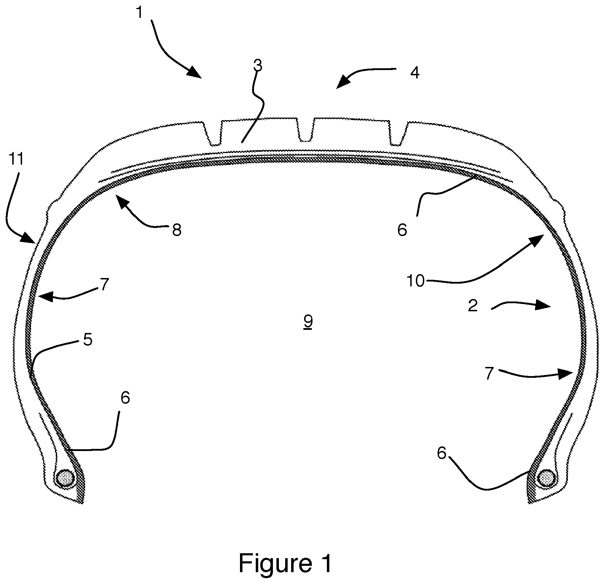

La figure 1 est une représentation schématique d'une vue en coupe d'un exemple de pneumatique comprenant des flancs 2, une zone sommet 3 pourvue d'une bande de roulement 4. Tel qu'illustré, le pneumatique prévoit une structure de renfort 5 qui s'étend d'un flanc à l'autre, en passant par la zone de sommet 3.

Les flancs 2, la zone sommet 3 et la structure de renfort 5 forment une structure porteuse adaptée pour supporter une partie de la charge correspondant au poids du véhicule et aux contraintes liées à l'utilisation du véhicule. La structure porteuse est délimitée intérieurement par les parois interne 10 et externe 11 du pneumatique.

Au moins une portion de la zone du pneumatique axialement intérieure à la structure de renfort 5 comporte un insert 6, au voisinage de la cavité 9 du pneumatique. L'insert 6 est donc situé entre la structure de renfort 5 et la paroi interne 10 du pneumatique.

Cet insert est constitué par une première composition élastomère servant de matrice dans lequel est réparti, de façon sensiblement uniforme, une seconde composition élastomère issue de pneumatiques recyclés.

La proportion de seconde composition élastomère est supérieure ou égale à 40%, et plus préférentiellement supérieure ou égale à 60%, et encore plus préférentiellement supérieure ou égale à 80%.

La seconde composition élastomère présente une granulométrie inférieure ou égale à 1mm et préférentiellement inférieure ou égale à à 0,5mm, et encore plus préférentiellement inférieure ou égale à 0,2mm de diamètre moyen de chacune des particules.

Dans l'exemple illustré, l'insert 6 parcourt toute la zone interne du pneumatique, d'un bourrelet à l'autre. Selon diverses variantes de réalisation, l'insert est localisé dans une portion plus restreinte, telle que par exemple, dans la direction radiale dans au moins un des flancs 2, ou le long de la zone sommet 3, sous cette dernière, ou encore dans la zone de l'épaule 8 du pneumatique.

Tel qu'illustré, l'insert est recouvert, du côté de la cavité 9 du pneumatique, d'une couche 7 d'étanchéité. Cette couche est dépourvue de composition élastomère issue de pneumatiques recyclés. Elle comporte avantageusement plus de 50 pce de butyle. Elle comporte avantageusement des éléments antioxydants comme par exemple du 6 PPD.

L'insert selon l'invention peut être utilisé sur tout type de pneumatique. Ses avantages sont notables sur des pneumatiques pour véhicules poids lourds ou de génie civil. Par exemple, dans le cas des pneumatiques de génie civil, l'épaisseur de l'insert peut être supérieure à 5 mm et, pour certaines dimensions de pneumatiques, atteindre 8 à 10 mm.

### Numéros de référence employés sur les figures

- 1: Pneumatique
- 2: Flanc
- 3: Zone sommet
- 4: Bande de roulement
- 5: Structure de renfort
- 6: Insert
- 7: Couche d'étanchéité
- 8: Epaule
- 9: Cavité du pneumatique
- 10: Paroi interne du pneumatique

## Revendications

1. Pneumatique (1) comprenant des flancs (2), une zone sommet (3) pourvue d'une bande de roulement (4), d'une structure de renfort (5) s'étendant entre les flancs (2) et passant par la zone sommet (3), lesdits flancs, ladite zone sommet et ladite structure de renfort formant une structure porteuse délimitée intérieurement par une paroi interne (10) de pneumatique, **caractérisé en ce qu'**au moins une portion de la zone du pneumatique située entre la structure de renfort (5) et la paroi interne (10) comporte un insert (6) faisant structurellement partie de la structure porteuse et comprenant une première composition élastomère servant de matrice dans laquelle est répartie, de façon sensiblement uniforme, une seconde composition élastomère issue de pneumatiques recyclés, la proportion de ladite seconde composition élastomère étant supérieure ou égale à 40%.

2. Pneumatique (1) selon la revendication 1, **caractérisé en ce que** la première composition est une composition caoutchoutique.

3. Pneumatique (1) selon l'une des revendications 1 ou 2, **caractérisé en ce que** la seconde composition élastomère est présente en une quantité supérieure ou égale à 60%.

4. Pneumatique (1) selon l'une des revendications 1 ou 2, **caractérisé en ce que** la seconde composition élastomère est présente en une quantité supérieure ou égale à 80%.

5. Pneumatique (1) selon l'une quelconque des revendications précédentes, **caractérisé en ce que** l'insert (6) est situé sous la zone de sommet.

6. Pneumatique (1) selon l'une quelconque des revendications précédentes, **caractérisé en ce que** l'insert (6) est situé le long d'au moins un des flancs (2) selon la direction radiale.

7. Pneumatique (1) selon l'une quelconque des revendications précédentes, **caractérisé en ce que** l'insert (6) est situé dans au moins une extrémité axiale de la structure de renfort, encore appelée épaule.

8. Pneumatique (1) selon l'une quelconque des revendications précédentes, **caractérisé en ce que** l'insert (6) est recouvert d'une couche (7) d'étanchéité dépourvue de composition élastomère issue de pneumatiques recyclés.

9. Pneumatique (1) selon la revendication 8, **caractérisé en ce que** la couche (7) d'étanchéité comporte plus de 50 pce de butyle.

10. Pneumatique (1) selon l'une des revendications 8 ou 9, **caractérisé en ce que** la couche (7) d'étanchéité comporte des éléments antioxydants.

11. Pneumatique (1) selon l'une quelconque des revendications précédentes, **caractérisé en ce que** la seconde composition élastomère issue de pneumatiques recyclés présente une granulométrie inférieure ou égale à 1 mm et préférentiellement inférieure ou égale à 0,5mm, et encore plus préférentiellement inférieure ou égale à 0,2mm de diamètre moyen de chacune des particules.

12. Pneumatique (1) selon l'une quelconque des revendication 1 à 11, **caractérisé en ce que** la première composition élastomère présente un taux élevé d'antioxydants.

## Patentansprüche

1. Reifen (1) umfassend Flanken (2), einen Scheitelbereich (3), der mit einem Laufstreifen (4), einer Verstärkungsstruktur (5), die sich zwischen den Flanken (2) erstreckt und den Scheitelbereich (3) durchläuft, versehen ist, wobei die Flanken, der Scheitelbereich und die Verstärkungsstruktur eine Tragstruktur bilden, die innen von einer Reifeninnenwand (10) begrenzt ist, **dadurch gekennzeichnet, dass** wenigstens ein Abschnitt des Bereichs des Reifens, der sich zwischen der Verstärkungsstruktur (5) und der Innenwand (10) befindet, einen Einsatz (6) aufweist, der strukturell zu der Tragstruktur gehört und eine erste Elastomerzusammensetzung umfasst, die als Matrix dient, in welcher eine zweite Elastomerzusammensetzung aus recycelten Reifen im Wesentlichen gleichmäßig verteilt ist, wobei der Anteil der zweiten Elastomerzusammensetzung größer als oder gleich 40 % ist.

2. Reifen (1) nach Anspruch 1, **dadurch gekennzeichnet, dass** die erste Zusammensetzung eine Gummizusammensetzung ist.

3. Reifen (1) nach einem der Ansprüche 1 oder 2, **dadurch gekennzeichnet, dass** die zweite Elastomerzusammensetzung in einer Menge größer als oder gleich 60 % vorhanden ist.

4. Reifen (1) nach einem der Ansprüche 1 oder 2, **dadurch gekennzeichnet, dass** die zweite Elastomerzusammensetzung in einer Menge größer als oder gleich 80 % vorhanden ist.

5. Reifen (1) nach einem der vorhergehenden Ansprüche, **dadurch gekennzeichnet, dass** sich der Einsatz (6) unter dem Scheitelbereich befindet.

6. Reifen (1) nach einem der vorhergehenden Ansprüche, **dadurch gekennzeichnet, dass** sich der Einsatz (6) entlang mindestens einer der Flanken (2) gemäß der Radialrichtung befindet.

7. Reifen (1) nach einem der vorhergehenden Ansprüche, **dadurch gekennzeichnet, dass** sich der Einsatz (6) in mindestens einem Axialende der Verstärkungsstruktur befindet, das auch Schulter genannt wird.

8. Reifen (1) nach einem der vorhergehenden Ansprüche, **dadurch gekennzeichnet, dass** der Einsatz (6) von einer Dichtungsschicht (7) bedeckt ist, die keine Elastomerzusammensetzung aus recycelten Reifen enthält.

9. Reifen (1) nach Anspruch 8, **dadurch gekennzeichnet, dass** die Dichtungsschicht (7) mehr als 50 pce Butyl aufweist.

10. Reifen (1) nach einem der Ansprüche 8 oder 9, **dadurch gekennzeichnet, dass** die Dichtungsschicht (7) Antioxidanselemente aufweist.

11. Reifen (1) nach einem der vorhergehenden Ansprüche, **dadurch gekennzeichnet, dass** die zweite Elastomerzusammensetzung aus recycelten Reifen eine Granulometrie kleiner als oder gleich 1 mm und vorzugsweise kleiner als oder gleich 0,5 mm, und besser noch kleiner als oder gleich 0,2 mm des mittleren Durchmessers jedes der Teilchen aufweist.

12. Reifen (1) nach einem der Ansprüche 1 bis 11, **dadurch gekennzeichnet, dass** die erste Elastomerzusammensetzung eine erhöhte Antioxidantienrate aufweist.

## Claims

1. Tyre (1) comprising sidewalls (2), a crown region (3) provided with a tread (4), with a reinforcing structure (5) extending between the sidewalls (2) and passing via the crown region (3), said sidewalls, said crown region and said reinforcing structure forming a bearing structure delimited internally by a tyre inner wall (10), **characterized in that** at least a portion of the region of the tyre located between the reinforcing structure (5) and the inner wall (10) comprises an insert (6) structurally forming part of the bearing structure and comprising a first elastomer composition serving as a matrix, within which a second elastomer composition originating from recycled tyres is distributed substantially uniformly, the proportion of said second elastomer composition being greater than or equal to 40%.

2. Tyre (1) according to Claim 1, **characterized in that** the first composition is a rubber composition.

3. Tyre (1) according to either of Claims 1 and 2, **characterized in that** the second elastomer composition is present in an amount greater than or equal to 60%.

4. Tyre (1) according to either of Claims 1 and 2, **characterized in that** the second elastomer composition is present in an amount greater than or equal to 80%.

5. Tyre (1) according to any one of the preceding claims, **characterized in that** the insert (6) is located under the crown region.

6. Tyre (1) according to any one of the preceding claims, **characterized in that** the insert (6) is located along at least one of the sidewalls (2) in the radial direction.

7. Tyre (1) according to any one of the preceding claims, **characterized in that** the insert (6) is located in at least one axial end of the reinforcing structure, also referred to as shoulder.

8. Tyre (1) according to any one of the preceding claims, **characterized in that** the insert (6) is covered with an airtight layer (7) devoid of elastomer composition originating from recycled tyres.

9. Tyre (1) according to Claim 8, **characterized in that** the airtight layer (7) comprises more than 50 phr of butyl.

10. Tyre (1) according to either of Claims 8 and 9, **characterized in that** the airtight layer (7) comprises antioxidant elements.

11. Tyre (1) according to any one of the preceding claims, **characterized in that** the second elastomer composition originating from recycled tyres has a particle size distribution of less than or equal to 1 mm and preferentially less than or equal to 0.5 mm and even more preferentially less than or equal to 0.2 mm of mean diameter of each of the particles.

12. Tyre (1) according to any one of Claims 1 to 11, **characterized in that** the first elastomer composition has a high content of antioxidants.
